# EUROPEAN PATENT APPLICATION

(11) **EP 1 179 952 A1**
(43) Date of publication of application: **13.02.2002**
(21) Application number: 00116294.0
(22) Date of filing: 10.08.2000
(51) Int. Cl.: H04M 3/493

(54) **Interactive data exchange and data communication system and method**

(71) Applicant: Sonera Corporation, 00510 Helsinki (FI)
(72) Inventor: Pantsar, Anu, 05850 Lappeenranta (FI); Lampinen, Mikko, 05850 Lappeenranta (FI)
(74) Representative: Lang, Johannes, Dipl.-Ing.

(57) **Abstract**

A system for interactive data exchange between subscribers of a telecommunications network service and the telecommunications network service provider comprises means for registering the subscriber to the service, database means for storing subscriber profile information, means for providing gaming data and advertisement information related to the particular subscriber profile to the subscriber, means for receiving a reply message from the subscriber participating in a game means for determining and selecting an action in response to the reply message, means for performing the determined and selected action and means for informing an advertisement provider about the outcome of the game.

## Description

The invention relates to a system and method for the provision of interactive data exchange and data communication services. In particular, the invention relates to the provision of interactive entertainment services, such as games and the like, in combination with promotional, informational or advertisement messages transmitted over a computer or telecommunication network, such as a mobile telecommunications network or the Internet.

The distribution and provision of advertising information via telecommunication networks is becoming more and more important with the increasing use of mobile phones and Internet services and the expanding e-commerce (electronic commerce) and m-commerce (mobile commerce). Games, such as betting, pools, sweepstakes, or other entertainment services to be received via mobile phones or the internet are also becoming more and more popular. These games require an interactive data communication between the game provider and the player or user. The player answers to questions (like "Which team will win?", for example) forwarded by the game provider, and in case of the correct answer receives a prize from the game provider.

One important marketing aspect is the targeting of advertisement messages. The distribution of promotional information is most effective if the distributed information is closely related to the end-user's interest. Therefore, the target audience for such information should be clearly defined. On-line systems such as web-site banners in connection with user registration (to the web site) have given one solution for this problem. However, there are several inconveniences related thereto. Firstly, the user's profile may not necessarily be roaming with him; secondly the user is usually not able to select which advertiser to see or to monitor.

On the other hand, interactive games or entertainment services for the distribution on mobile phones or the internet are known, but these services are not connected with advertisement facilities. It is also known that telephone operators are providing game operators with user data or accounting information.

From EP 0 986 273 a very general concept of transmitting advertisement information via SMS (Short Message Service) is known but no technical solution is described in this document. Moreover, with so called push advertising, i.e. the largely spread and not targeted distribution of advertisement information, the customer's or user's attendance may not be gained appropriately, as there are some occasions when the user might not want to be disturbed. It is problematic to determine when to send advertisement information as there is usually no information available relating the user's whereabouts except his location.

WO 97/41654 describes a system for the dissemination of information to subscribers of a mobile telecommunications network but no interactive data exchange between the subscriber and the provider of the telecommunications network is provided.

Therefore, in general, two problems have to be solved which are related to the provision of advertisment and entertainment or information services. First, the correct and most receptive target for the respective campaign (advertisement, games, specific information) has to be found. Secondly, the most cost effective way has to be found how to bill the user for the service (gaming, for example) and how to enable the operator to announce and deliver the prizes won.

Furthermore, the information flow between the different parties has to be organized. In general, four or more parties are involved: the end user, the mobile phone operator or internet provider, the game operator and the advertisers. Many different user databases are existing for which no coherent management system has been previously defined. Since the campaigns have to be very specifically tailored to the need of the end user, the information management system must enable customization according to the specific needs. In a mobile phone environment the efficiency of bandwidth usage has to be increased since the response message (e.g. an SMS) will possibly carry advertisement information. Nevertheless, it is desirable to use existing telecommunications and computer network equipement.

It is the object of the present invention to provide a method and system for interactive data exchange and data communication through which interactive services, such as games and the like, can be transmitted in combination with promotional, informational or advertisement messages over a computer or telecommunication network, such as a mobile telecommunications network or the Internet. It is a further object of the invention to provide such a method and system through which advertisement messages can be tailored to the user and which allows easy billing and delivering of prizes.

These objects are obtained by the system and the method according to independent claims 1 and 7.

Further preferred embodiments of the invention are subject of the dependent claims.

According to the invention a system for interactive data exchange between subscribers of a telecommunications network service and the telecommunications network service provider comprises means for registering the subscriber to the service, database means for storing subscriber profile information, means for providing gaming data and advertisement information related to the particular subscriber profile to the subscriber, means for receiving a reply message from the subscriber participating in a game means for determining and selecting an action in response to the reply message, means for performing the determined and selected action and means for informing an advertisement provider about the outcome of the game.

According to another preferred embodiment of the invention the means for providing gaming data and advertisement information to the subscriber and receiving a reply message from the subscriber comprise a short message switching center, a gateway for the reception of SMS-messages, a billing management unit and a web access unit, and the gateway and the web access unit are connected to a management system unit. The management system unit distributes the incoming messages to one of a plurality of service management system units, each handling one specific service and exchanging data with a corresponding processor unit and a database unit.

In an advantageous manner the processor unit comprises an administration processor, a competition processor and a customer processor. The database unit comprises an administration database, a competition database and a customer database. Furthermore, according to a preferred embodiment of the invention the advertisement information is transferred from the advertisement provider to the management unit.

According to a further embodiment of the invention a method for interactive data exchange between a subscriber of a telecommunications network service and the telecommunications network service provider is provided, comprising the steps of registering the subscriber to the service, storing subscriber profile information in a database, providing gaming data and advertisement information related to the particular subscriber to the subscriber, receiving a reply message from the subscriber participating in a game, determining and selecting an action in response to the reply message received, performing the action determined and selected, and informing an advertisement provider about the outcome of the game. This information can be the name of the winning party, a control number, a telephone number of the winner, his name etc.

According to a preferred embodiment the gaming data and the advertisement information are transmitted to the subscriber and the reply message received from the subscriber is in the form of written text, an image or pictorial symbol, or a voice message.

The data exchange between the service provider and the subscriber is preferably transmitted via a mobile communications network carrier to subscribers of the network equipped with mobile telecommunications terminals, or via a computer network to subscribers of the network.

According to another embodiment the data exchange between the service provider and the subscriber is made in the form of short message service (SMS) text messages.

Preferably, the information transmitted to the advertisement provider is information identifying the winner of the game and/or information enabling deliverance of the prizes won.

Further advantages and details of preferred embodiments of the invention will be described in the following by way of example with reference to the accompanying drawing in which:
- Fig. 1: is a schematic diagram of an example of a preferred embodiment of the invention;
- Fig. 2: is a block diagram of a preferred system according to the present invention;
- Fig. 3 to 11A: are diagrams showing the signal flow according to a preferred embodiment of the present invention.

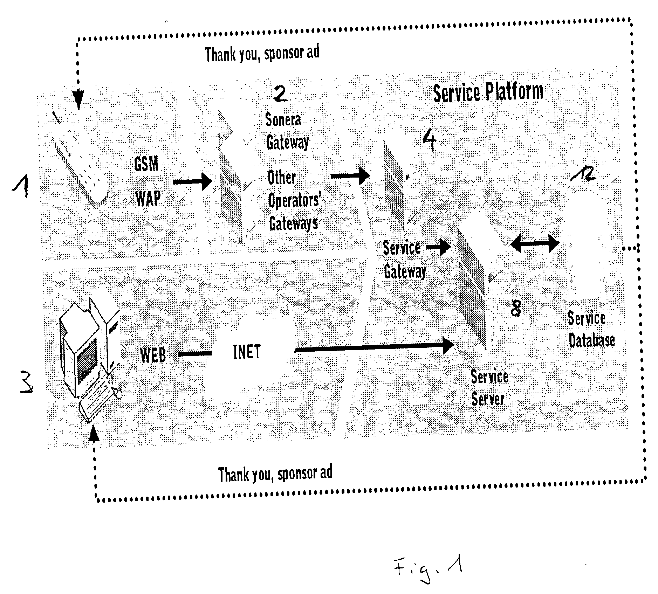

Fig. 1 shows a schematic diagram of an example of a preferred embodiment of the invention. 1, 3 is the user side showing a mobile phone terminal 1 and a computer terminal 3, respectively. 2 indicates the telecommunications operator gateway. A service platform comprises a service gateway 4, a service server 8 and a service database 12 for the storage of user and sponsor information.

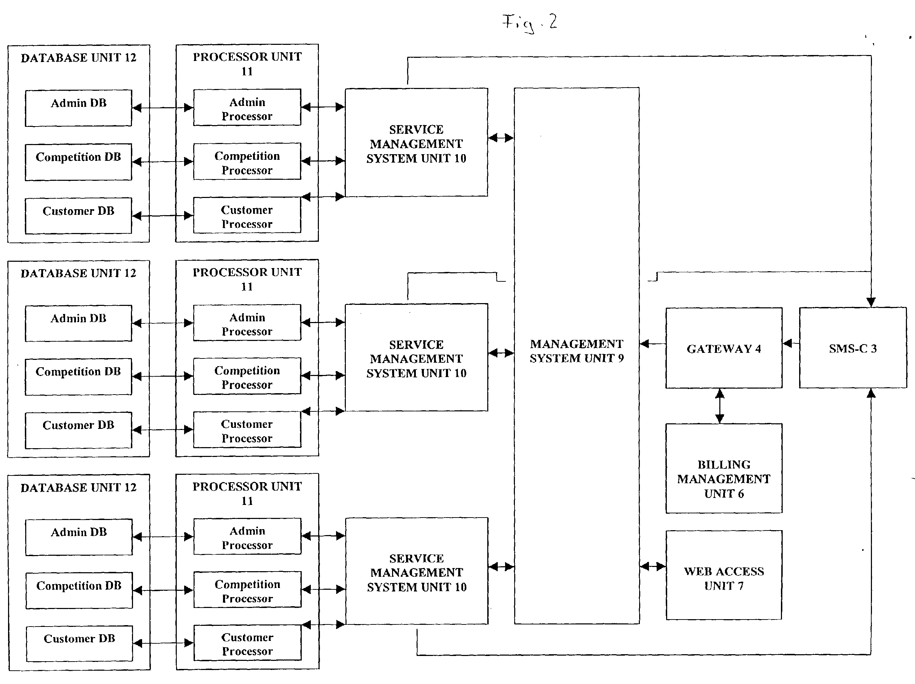

Fig. 2 shows a block diagram of a preferred system (or service platform) according to the invention. A short message switching center (SMS-C) 3 is connected to the telecommunications services gateway 2 on one side and is able to transmit a SMS (Short Message Service) message received from a subscriber's or end users's mobile phone terminal 1 (not shown) to the service gateway 4. The service gateway 4 is connected to a billing management unit 6 in which billing information is stored. This billing information comprises information about the billing conditions applied to a specific subscriber for a specific service.

Also shown in Fig. 2 is a web access unit 7 which allows the access to the service via a computer network such as the Internet instead by means of an SMS message.

Both, the service gateway 4 and the web access unit 7 are respectively connected to a management system unit 9 which transmits information received from the subscriber via SMS or the Internet, for example, to one of several service management system units 10 corresponding to the service specified by the subscriber in his message. For each particular service offered by the system, at least one service management system unit 10 is provided. Each of said service management system units 10 is connected to a database unit 12 through a processor unit 11. The processor units 11 handle the specific information in the received message. Each processor unit 11 comprises at least an administration processor ("Admin Processor"), a competition processor and a customer processor. The administration processor handles all information related to the administration of the service, such as start and end times of the service. The competition processor handles all information related more specifically to the service provided to the subscriber, e.g. betting on the outcome of a sports competition event. The customer processor handles all information related to the subscriber or end-user (for example, login name, password etc.).

The database unit 12 comprises an administration database, a competition database and customer database. These databases store and provide the data necessary for the procedures executed by the corresponding processors.

Of course, more than three or other specific processor units and corresponding databases could be provided depending on the services offered to the subscriber.

As can be seen from the preferred embodiment of the invention shown in Fig. 2, the subscriber or end-user sends a message via SMS or a computer network to the management system unit 9 and receives reply messages from the system through the service management system units 10 via SMS on his mobile phone terminal 1 or via a telecommunications transmission line on his computer terminal 3. It is also possible to send messages via SMS and to receive the reply message via a computer network or inversely. The exchanged messages may be in the form of written text, images, icons, symbols, voice or any other appropriate form.

The method and system according to the invention makes it possible to take advantage of telecommunication networks, such as mobile telecommunication networks, and computer networks, such as the internet, in advertisement and, in particular, allows that campaigns can be more interactive and more effectively focused to a particular target group. The method and system according to the invention gives the service provider the possibility to gather customer data and send commercials to them. Customer information may be gathered using various methods: games and contests, pools, or surveys, for example. The terms service and game or gaming in the context of the invention shall be understood as including all types of interactive games, betting, entertainment, contest, surveys and the like. The customers of the services can be a desired closed user group or users, who know the service keyword. A further possibility is to use cell broadcasting to select customers from desired geographical areas.

In general, the users of the system can be divided into three groups:
- Developers and administrators, i.e. the persons who produce, develop and maintain the service (content providers).
- Service providers, sponsors, i.e. the owners of the service concept, content providers, advertisers
- Customers, i.e. the end users of the service.

Examples of possible services (games) are:
- Quizzes:: In general, a quiz consists of a series of multiple choice questions.
There are two ways to take part in quizzes. For example, the customer can belong to a particular user group. In this case the customer will receive the first question automatically. Another option is that the customer who wishes to take part in the quiz sends an SMS or uses an Internet or other computer network interface to register as a competitor. In both cases customers are able to reply to questions with the desired answer. If the answer is correct, the customer receives a second question and so on. If the answer of the customer is wrong, he will receive the same multiple-choice question again. If the customer replies too many wrong answers his game will be over. The customer who copes with all the questions will receive a congratulation message and a gift or winner prize.
- Voting:: Voting is used when it is needed that customers are able to take a vote on a desired alternative, for example the best product among several types or brands of products. Customers are able to take a vote by sending a word, specific character string or symbol. The results of the votes are sent back to the service provider by SMS or the Internet, for example. The results might also be displayed on a Web page.
- Feedback:: The service can also be used for giving a feedback to, e.g. a particular conference presentation. Another kind of feedback is to answer to a series of questions that are sent to customer. The results are then sent to the service provider or sponsor.
- Advertisement:: It is possible to use a web interface to send advertisement messages to a desired target group. Depending on the needs of the sponsor, advertisement messages can be sent frequently or only once. It is possible to use a timer to determine when the advertisement messages are sent to customers. According to different national legal provisions, the possibility for the end-user might be provided to refuse the reception of advertisement messages.

All these services (games) allow to gather data showing the interests of a user/customer and thus to tailor sponsor advertisement messages to his interests.

In a first step, in order to make the user register to a new campaign, game or service, the attention of the user or customer has to be gained by showing some advertisement information in a newspaper, magazine, bottle etiquette, or on a web page, for example, depending on the campaign organized. Futhermore, when initiating such a campaign, game or service the advertising campaign organizer (sponsor) data is transmitted to the game operator. The data may contain advertisement information, information about the games the sponsor is willing to sponsor etc.

Then, the user who wishes to participate in a game or campaign registers. The registration can be made via a specific internet web page, per SMS, by phone call (Interactive Voice Response (IVR) may be used, for example), or using any other suitable method. The registration can be done directly in the campaign organizer or game operator site. The personal data of the user are stored in the database unit 5. After having registered, the user will receive a "Thank you" message, together with a sponsor advertisement message and the question to be answered. He then can answer to the question (for example, enter the name of the winning team) and take part of the game.

In the following a preferred example using registration by SMS will be discussed briefly. The registration message may comprise the type of the desired game (or campaign) to follow as well as the user's alias to be used for the service. It may also comprise the betting information (guessed score, positions in a race or similar). Usually this latter information is sent after receiving the conformation message.

The registration message is then forwarded to the game operator who creates a database entry to maintain the list of users. The database is used for saving game information as well. After receiving the pool (or guess for score) the game operator stores the information in the database.

After receiving the results of the game (race) the game operator server computes correlations between pools/bets and results. The server stores the information in the database. In a preferred embodiment the information is further transmitted to a partner system or an advertisement provider to enable delivery of the prize. This information can be the name of the winning party, a control number, a telephone number of the winner, his name, address etc.

Combining the advertisement (sponsoring) system with the gaming or entertainment system has the advantage that the advertiser (sponsor or advertisement provider) profits from the personal data base established by the game operator. Thus the advertisement message of the sponsor can be tailored to the needs and profile of the customer. Moreover, the operator system is easily used for billing. Billing through the (phone) operator has the advantage to provide a comfortable & secure way to allow occasional users to participate as well.

In order to avoid a possible delay when transmitting the SMS's from the end-user to the game operator or vice versa which might cause problems in real-time systems, a time stamping system may be used. In this case the phone operator or SMS-C (short message switching center) may provide time stamps for the messages.

The system provided according to the invention is a generic platform that can run periodical campaigns and handle sponsored advertisement. This platform can be used, for example, via UMTS, GSM and Internet networks, but also any other type of appropriate network. The network connections can be via SMS for GSM users, web access for Internet users or SSH (Secure Shell) for the system administrator. The protocols used for communication may be selected from a wide variety of possibilities such as WAP, for example, used in downlink direction to deliver information content (images, text, sound etc.).

The portfolio of services is modular. Features can be tailored according to customer's needs. The concept is global and can be easily replicated to foreign markets. Furthermore, such kind of service can allow the development of a company's brand management, to achieve more contacts and to collect customer data.

Preferably, the service is hosted by the telecommunication provider. Thus it is controlled that the system can provide a 24 hours service per day.

The promotion server also provides customized Internet web pages for a web access to the service and its database. The service provider can have a hyperlink e.g. from the provider's homepage to the web pages customized for a particular campaign. This makes it possible to have an access to the service by using any Internet browser available on the market. The end-user is able to use Wireless Promotion services from Internet. The Web access requires computer with Internet browser and connections.

The service provider is responsible for the end-user Web access. The service provider to create customized Web pages for Web access. A web page and content administration toolkit can be used for this purpose. Both, web page and content administration toolkit are Java applications that can be used from the Web with Internet browser. It is possible to restrict the usage of the application by user identification, which means practically that the service provider is able to login in the system with specific login name and password. After successful login service provider may choose from two options:
- create a Web page for the end-user (html), e.g., registration page, answer page, competition results page
- create a content administration Web page for service provider's own purposes (html), e.g., sponsor message handling

The result in both cases is a Web page that has already been specified in the database. Developers provide the specification. The service provider is able to modify the content of the Web page during the creation process. The service provider is able to store the final Web page file to the promotion server and create page and be placed in a frame. This makes it possible to keep the former layout of the service provider's home pages.

Every service has its own database unit 12, an Oracle database, for example. All information needed for the service is stored in this database unit 12. Usually every single service has its own database unit 12. It is also possible that several services use the same database unit 12 if these services do not differ too much from each other, e.g. have the same users and/or the same service provider.

The tables and the content of the database unit 12 depend on the service provided. Some preferred information examples that can be stored into the service database unit 12 are shown below.

| Table | Content example |
|---|---|
| User information | Login name of a registered user |
| | Password |
| | Real name of a user |
| | Address of a user |
| | Language code used with a user |
| Answer | Login name of a user |
| | Answer |
| Reply | Internal identifier for reply message |
| | The reply message in one or more languages |
| Question | Question description |
| | The question in one or more languages |
| Points | Login name |
| | The score (points) of the user (e.g. in the quiz) |
| Services points | Login name |
| | Service code |
| | The total score of the user |
| Results | Internal result code |
| | Service name |
| | Result message |

The user information can be secured with a login name and a password. This makes it possible to identify users and make sure that users can have access only to their own individual information or information that is destined for all users.

A system administrator manages all the information. The connection to the database is secured by SSH (Secure Shell), which means that nobody else is able to have straight access to the database and its data. The system administrator or manager is responsible for customer management.

A preferred embodiment of the invention will now be described. As a practical example the case that a subscriber wishes to bet on the winning team of a sports competition event will be described.

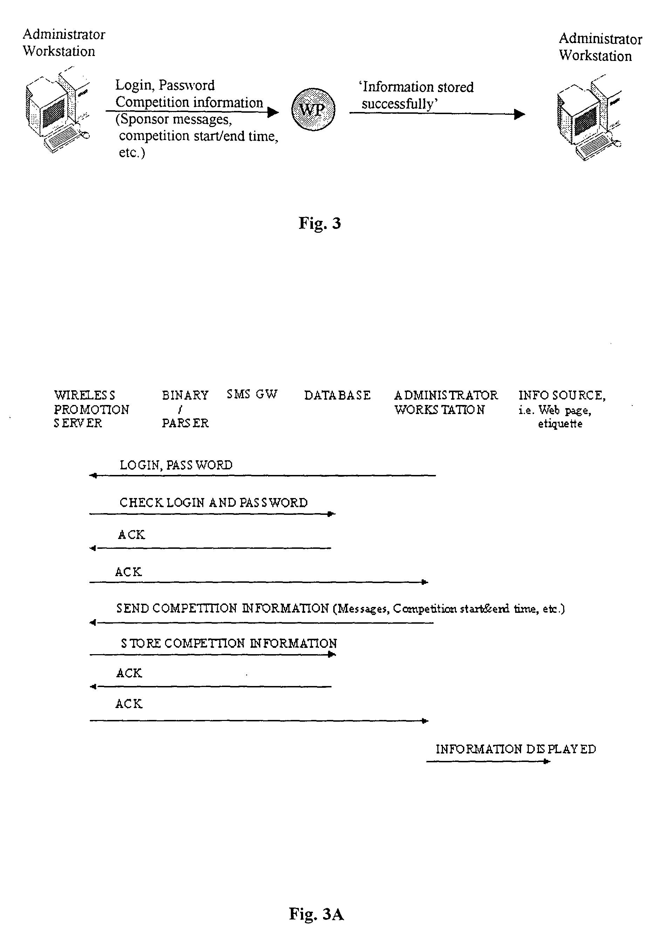

Fig. 3 and 3A show the set up phase of the system. The administrator workstation sends out a login and password information to the server of the promotion service provider WP (in the following called "promotion server"). After having checked the validity of this login and password information, the promotion server stores the information in a database which acknowledges receipt to the promotion server and, optionally, also to the administrator workstation. Then, the administrator workstation sends information about the sports competition (for example, soccer world championship) to the promotion server. This information can include the start and end time of the betting period (for example start one month before and end one day before the actual begin of the competition), sponsor messages with advertising content or help functions. This information is also stored in the database and after acknowledgement by the database and the promotion server, the administrator workstation enables the display of the information, for example, via a web page in the internet or via more traditional media, such as newspaper ads, bottle etiquettes etc.

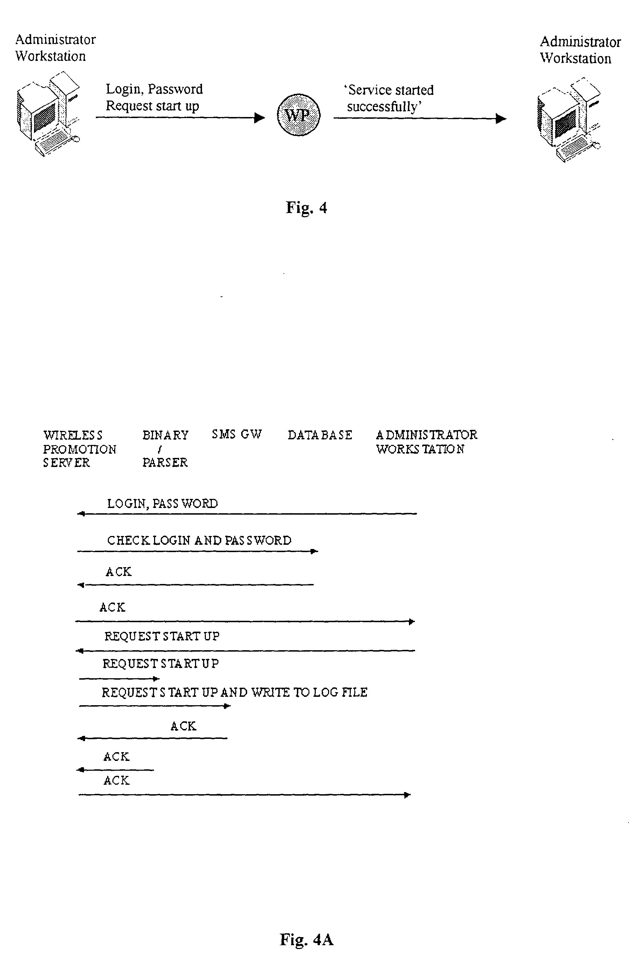

In a further step, Fig. 4 and 4A, the system is initiated. The administrator workstation sends a start up request to the promotion server WP which in turn initiates (starts up) the binary/parser and the SMS (short message service) gateway (SMS GW) and writes the information to the log file of the SMS GW. After acknowledgment of this procedure, the administrator workstation enables the subscription via SMS, a computer network or WAP. The start-up phase is now terminated.

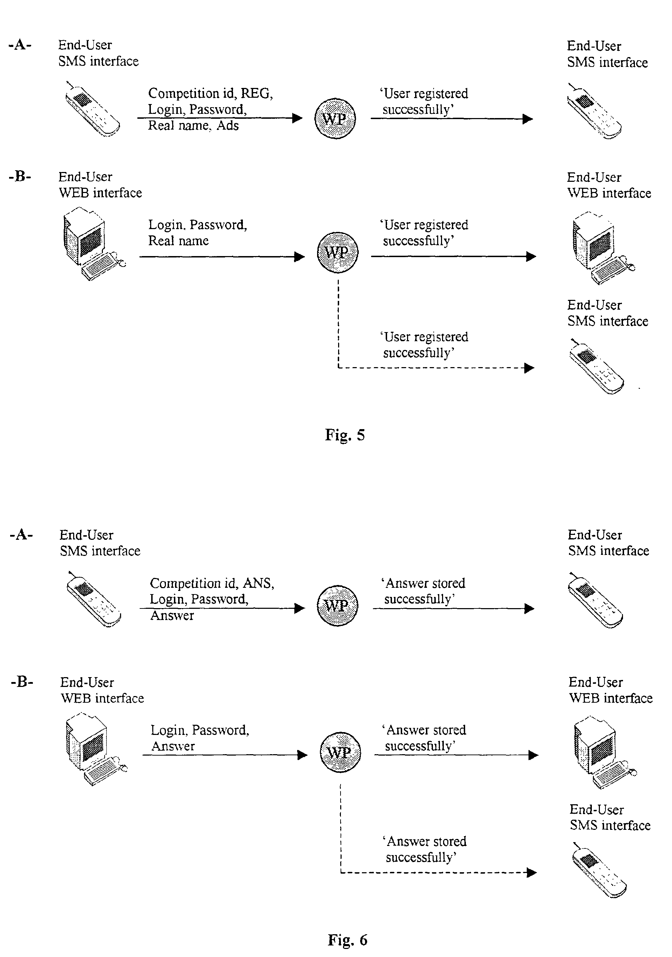

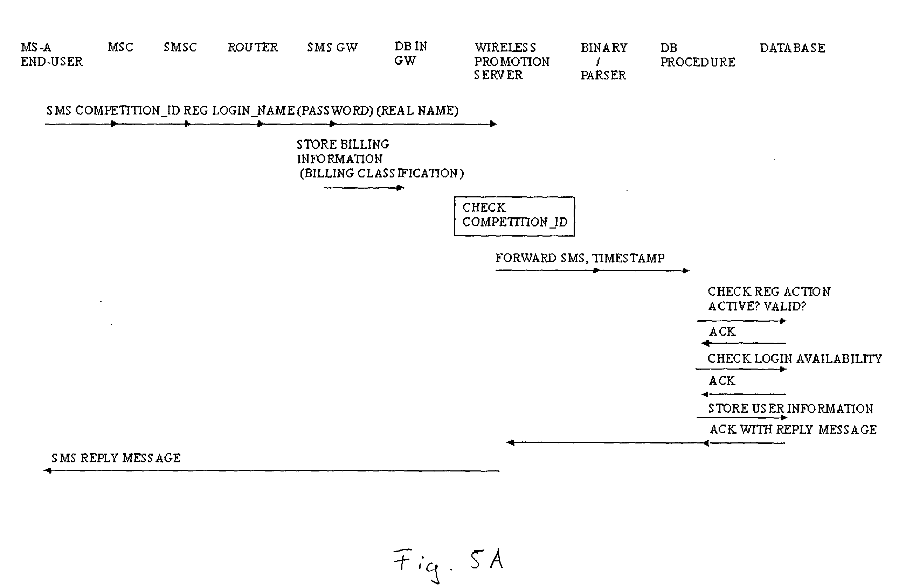

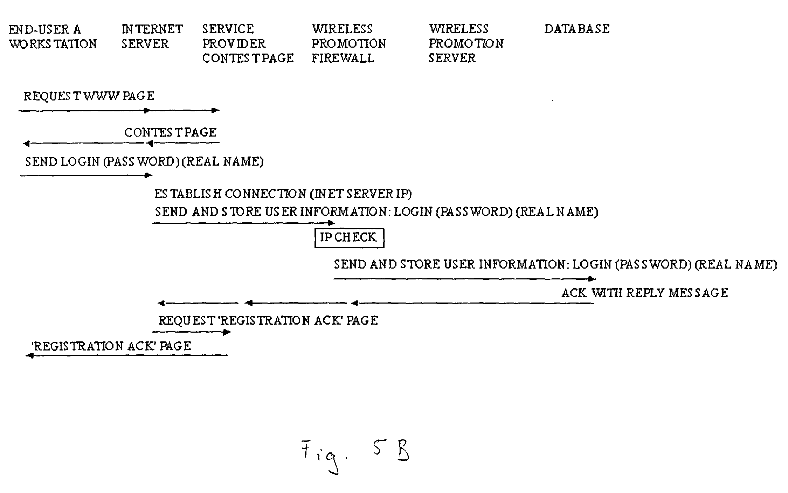

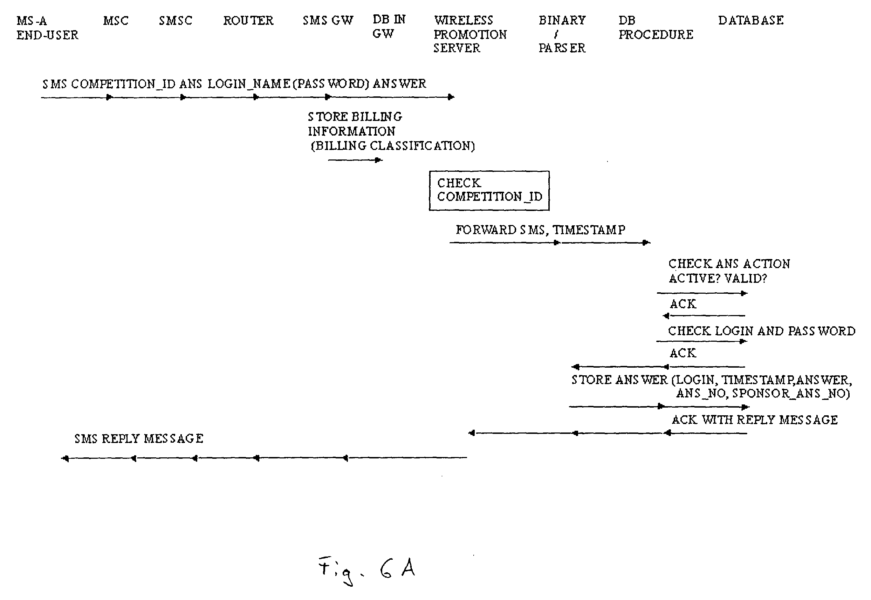

In case, an end-user or customer now wishes to subscribe to the betting service, he sends an SMS message from his mobile phone (mobile station A (MS-A) to the promotion server (Fig. 5, 5A). This SMS message has for example, the format: "competition_id reg login_name (passsword) (real name) (advertisement no)",wherein "competition_id" is the name of the chosen sports competition, "reg" is a request for registration followed by the login name ("login_name") and a password or the real name of the subscriber. Furthermore, depending on the law in the respective user country, information if the reception of advertisement messages is desired or not can be added. This SMS message is forwarded through the message switching center MSC, the short message switching center SMS-C, the router, the SMS gateway SMS GW, the database in the SMS gateway DB IN GW to the promotion server. Additionally, the SMS gateway SMS GW sends and stores billing information and classification to/in the corresponding database in the gateway (billing management unit 10; Fig. 2). The promotion server then checks the competition ID, for example, whether it corresponds to a still valid service or not. If the competition ID check is positive, the promotion server forwards the SMS together with a timestamp indicating the reception time of the SMS via the binary/parser to a database processing means through which it is checked in the database whether the required action (which means the registration action in this case) is still active and valid. For the registration of a betting service, the registration might be open (active), for example only during a period of two weeks before the start of the actual competition. After this period, the check will result in the answer that a registration action is not valid and active any more.

Also, the login availability is checked and the user information (for example, name, desired competition, password, phone number, etc.) is stored in the database. These checks are acknowledged with a reply message to the promotion server. Finally, the promotion server sends a SMS reply message to the subscriber. This reply message may include a thanking message together with a sponsor advertisement message. Furthermore, a request like "Please enter your winning team" will be sent to the subscriber. In the database of the system is stored information about the profile of the subscriber. This information has been gathered at the time the subscriber subscribed to the service or at any other occasion. Therefore, all reply messages sent back to the subscriber can include sponsor advertisement information tailored to the profile of the subscriber. Furthermore, the messages can be provided in the preferred language of the subscriber.

Fig. 5B shows a corresponding procedure for the registration via an Internet web site. In this case, the end user or subscriber uses his workstation or personal computer to open the internet page of the service provider via an Internet server. The service provider then sends back his web page ("contest page") including information about the desired competition to the end user workstation. The end user can then register by sending his login and password information to the internet server which will establish a connection to the fire wall of the promotion server ("promotion server firewall"). There, the IP of the internet server is checked for security reasons and afterwards the user information (login (password) (real name) is sent to and stored in the database. The database will acknowledge the storage of the information with a reply message and sponsor information to the internet server over the promotion server fire wall and the service provider contest page. The internet server then requests the "registration acknowledgement page") from the service provider which will be sent to and displayed on the end user workstation.

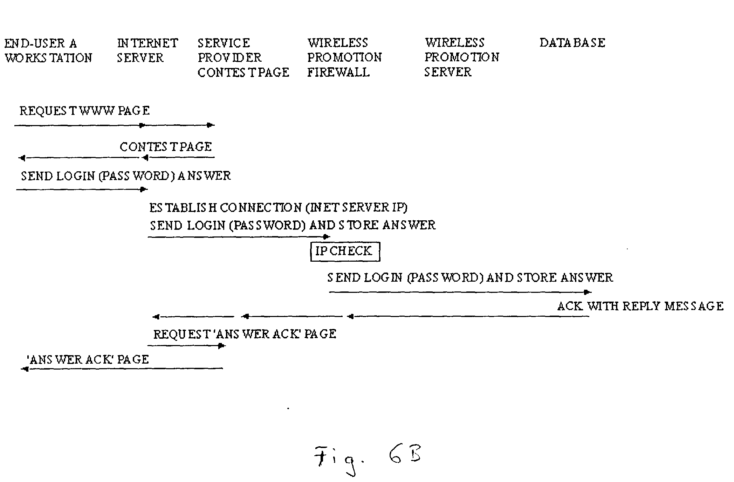

Fig. 6, 6A show the data signal transfer for answering. After having received the question about the sports competition, the subscriber sends an SMS message with his answer (for example, the name of the team which, according to him, has the best chances to win the competition) to the promotion server. This message can be, for example, "competition_id ans login_name (passsword) (answer)",wherein "competition_id" is the name of the chosen sports competition, "ans" is a request for giving an answer followed by the login name ("login_name") and the password of the subscriber, and the answer (the winning team) of the subscriber. Again billing information and classification will be sent by the SMS gateway to the database in the gateway and is stored there. The promotion server then checks the competition ID, for example, whether it corresponds to a still valid service or not. If the competition ID check is positive, the promotion server forwards the SMS together with a timestamp indicating the reception time of the SMS via the binary/parser to a database processing means through which it is checked in the database whether the required answer action is still active and valid, for example if the answering period has not expired yet.

Also, the login and password is checked and the new user information is stored in the database. This user information includes the login, timestamp and the answer of the user. Furthermore, information about the numbers of already received answers and the sponsor messages is counted. This information allows to establish statistics about the subscriber and the sponsor messages. These checks are acknowledged with a reply message to the promotion server. Finally, the promotion server sends a SMS reply message to the subscriber. This reply message may include a thanking message together with a sponsor advertisement message and the message that his answer has been registered.

Alternatively, the transmission of the answer can also be done via the internet. This is shown in detail in Fig. 6B. In this case, the end user or subscriber uses his workstation or personal computer to open the internet page of the service provider via an Internet server. The service provider then sends back his web page ("contest page") including information about the desired competition to the end user workstation. The end user can then answer by sending his login and password information to the internet server which will establish a connection to the fire wall of the promotion server ("promotion server firewall"). There, the IP of the internet server is checked for security reasons and afterwards the user information (login (password) (answer)) is sent to and stored in the database. The database acknowledges the storage of the information with a reply message and sponsor information to the internet server over the promotion server fire wall and the service provider contest page. The internet server then requests the "answer acknowledgement page") from the service provider which is sent to and displayed on the end user workstation.

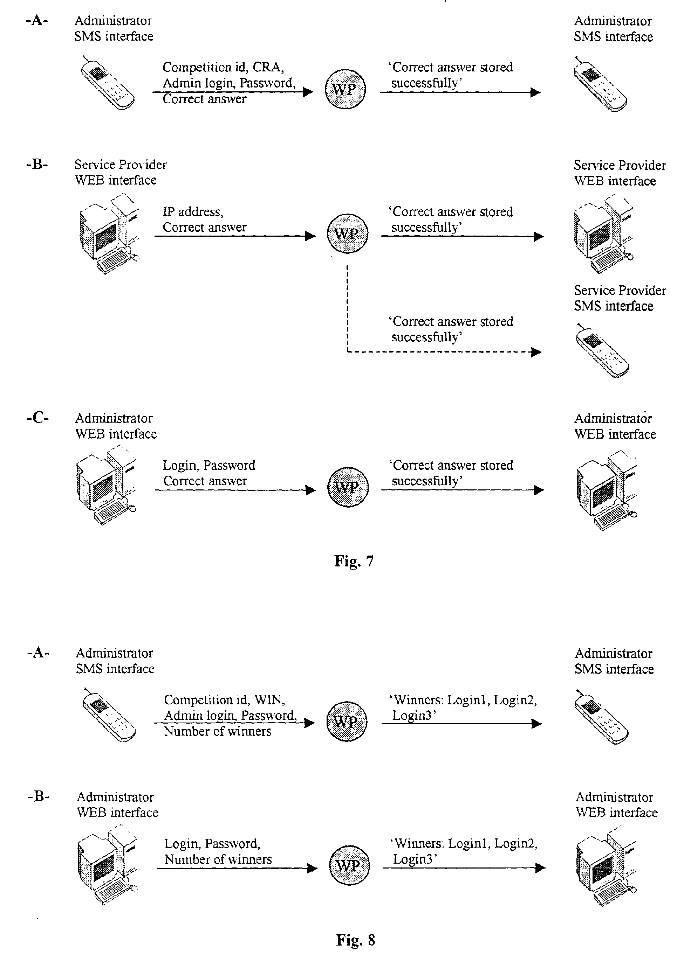

Once the correct answer has been established, i.e. the winner of the sports competition has been determined, the administrator updates the database. Fig. 7, 7A show an example of such an update via a mobile phone station MS-X ADMIN. The administrator sends a SMS message with the correct answer CRA to the promotion server. This message can be, for example, "competition_id cra login_name (passsword) (correct answer)",wherein "competition_id" is the name of the chosen sports competition, "cra" is a request for entering the correct answer followed by the login name ("login_name") and the password of the administrator, and the correct answer. Again billing information and classification is sent by the SMS gateway to the database in the gateway and is stored there. The promotion server then checks the competition ID, for example, whether it corresponds to a still valid service or not. If the competition ID check is positive, the promotion server forwards the SMS together with a timestamp indicating the reception time of the SMS via the binary/parser to a database processing means through which it is checked in the database whether the required "correct answer" action is still active and valid.

Also, the login and password is checked and the correct answer information is stored in the database. These checks are acknowledged with a reply message to the promotion server. Finally, the promotion server sends a SMS reply message to the administrator.

Fig. 7B shows the alternative update of the database by the service provider via the internet. This procedure is corresponding to the procedures of Fig. 5B and 6B. Fig. 7C shows the update via the Internet from the administrator workstation.

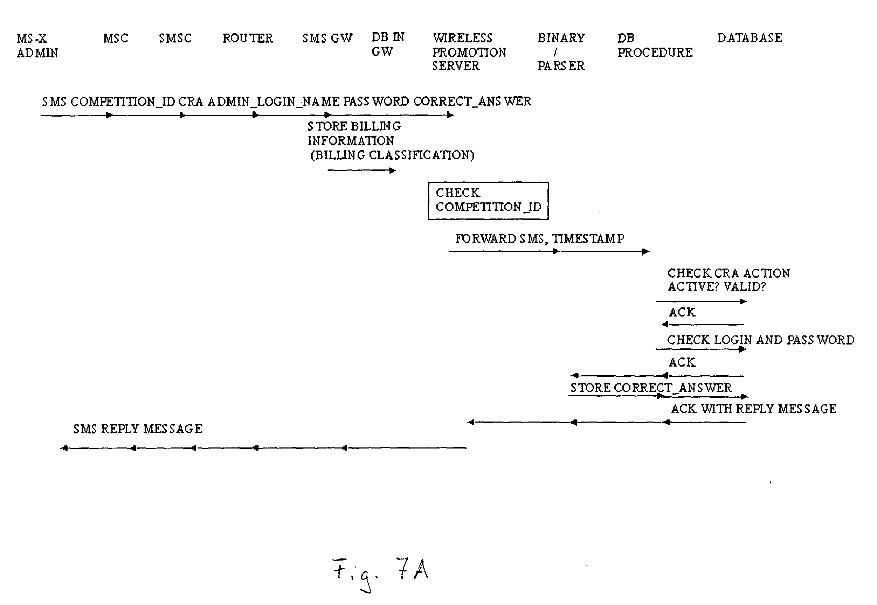

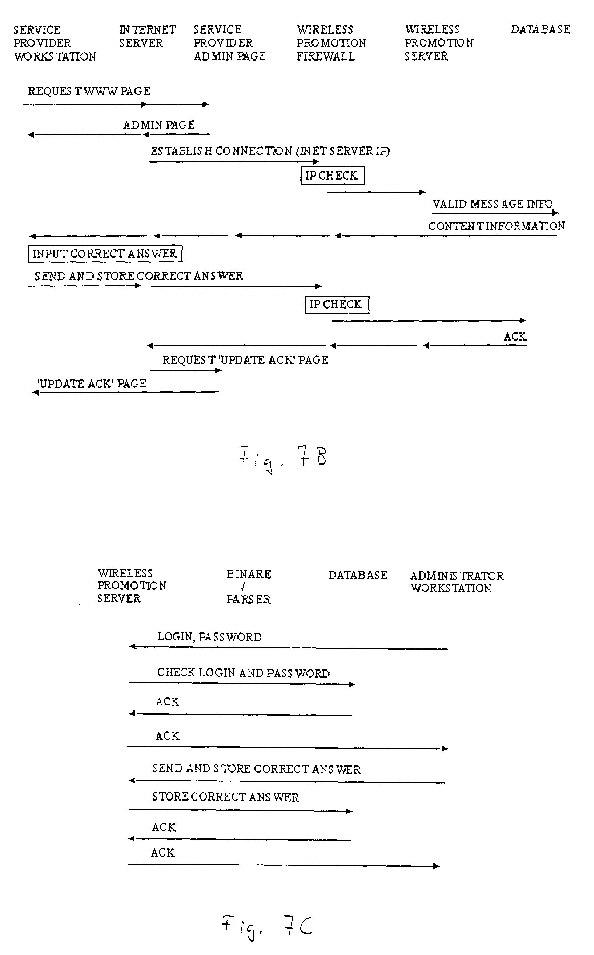

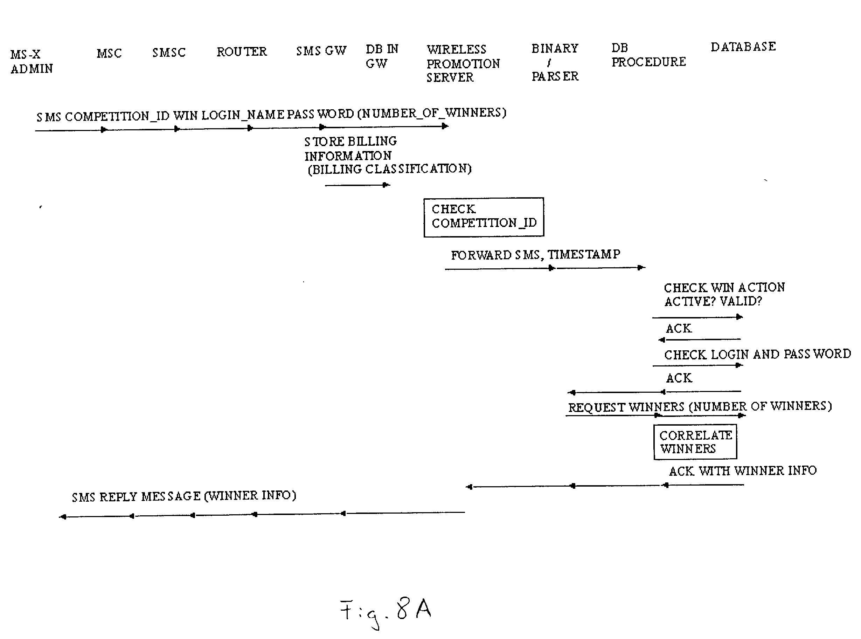

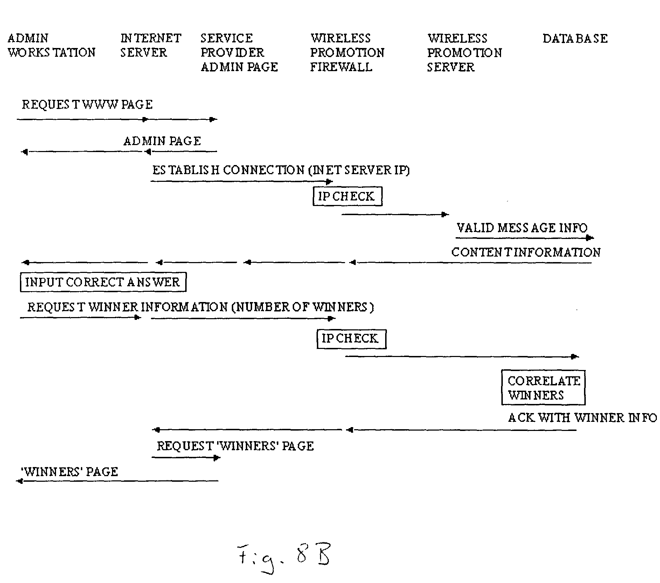

The administrator then requests the name of the winner or winners from the database (Fig. 8A; Fig. 8B). Fig. 8A shows an example of such a request via a mobile phone station MS-X ADMIN. The administrator sends a SMS message asking for the winner to the promotion server. This message can be, for example, "competition_id win login_name (passsword) (number of winners)", wherein "competition_id" is the name of the chosen sports competition, "win" is a request for the winner followed by the login name ("login_name") and the password of the administrator, and the number of winners. Again billing information and classification is sent by the SMS gateway to the database in the gateway and is stored there. The promotion server then checks the competition ID, for example, whether it corresponds to a still valid service or not. If the competition ID check is positive, the promotion server forwards the SMS together with a timestamp indicating the reception time of the SMS via the binare/parser to a database processing means through which it is checked in the database whether the required "winner" action is still active and valid.

Also, the login and password is checked and the winner information is fetched from the database. These checks are acknowledged with a winner reply message to the promotion server. Finally, the promotion server sends a SMS reply message with the winner information to the administrator.

Fig. 8B shows the corresponding procedure via the internet.

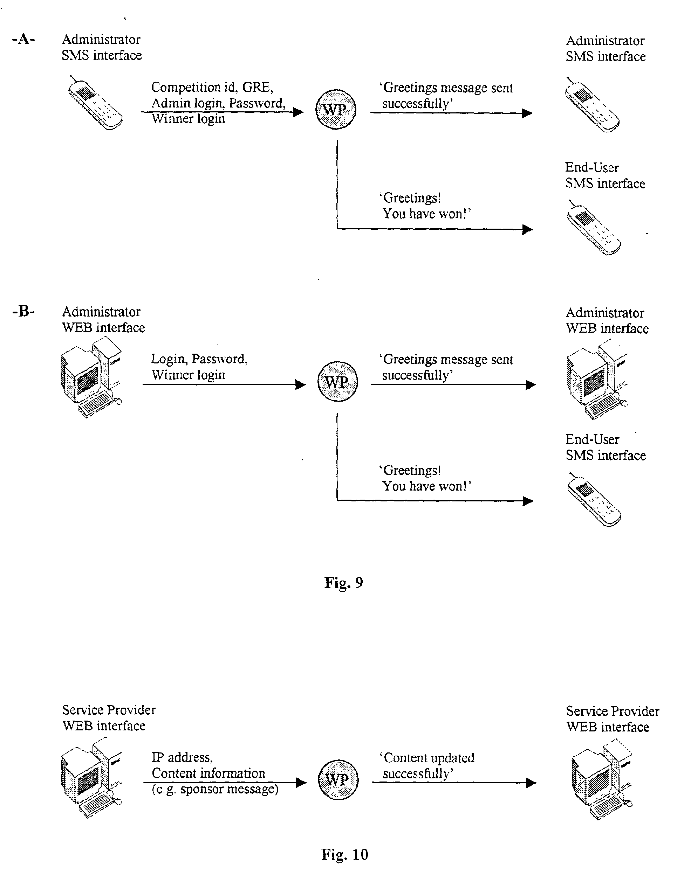

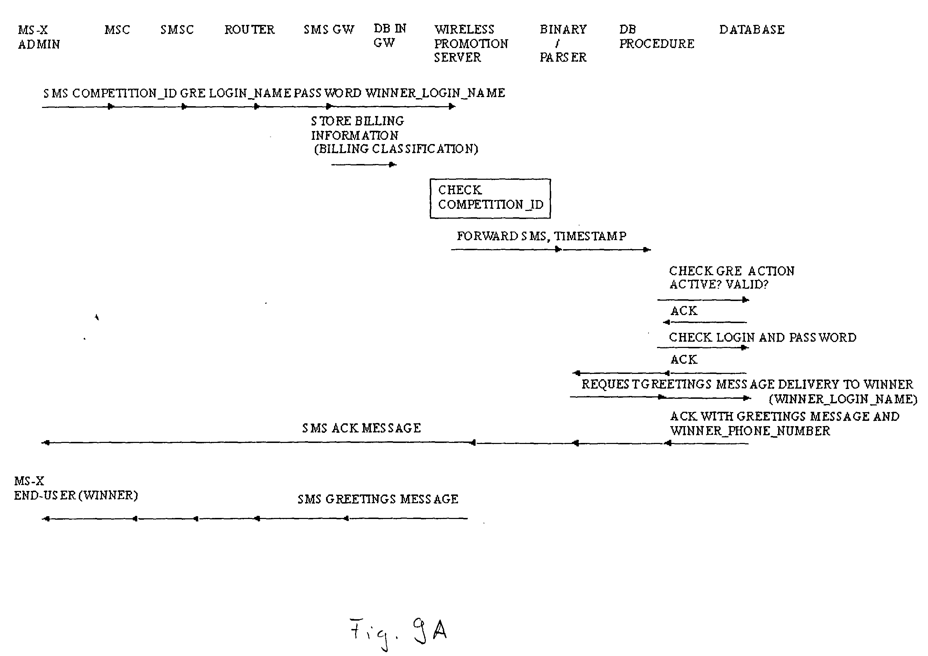

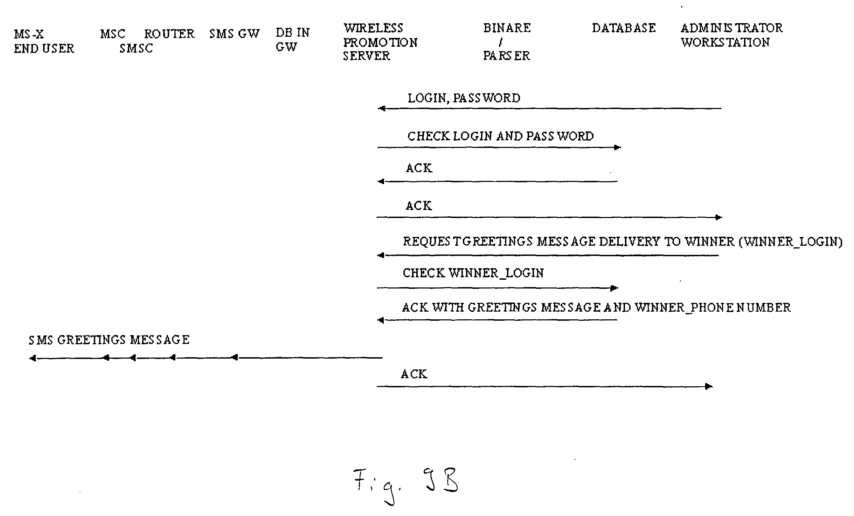

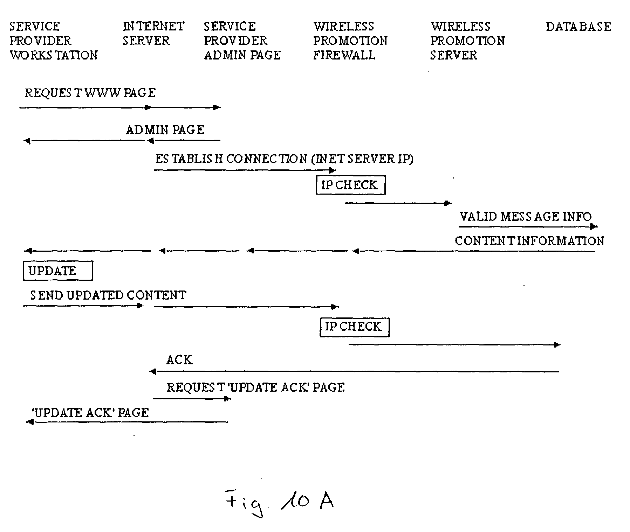

Finally, a greetings message is sent to the winners (Fig. 9A). Again, this can be done via an SMS interface (Fig. 9A) or a computer network, the internet for example (Fig. 9B).

Additionally, as shown in Fig. 10, 10A, the sponsor might at any time change its messages and adapt them to new products, for example. To this respect, the service provider workstation accesses the service provider administration page, establishes the connection to the promotion server and the database and then sends the updated content information about the new sponsor message back to the database where it is stored. This sponsor message update procedure is then acknowledged to the service provider workstation.

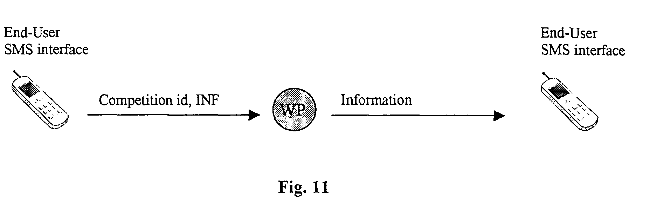

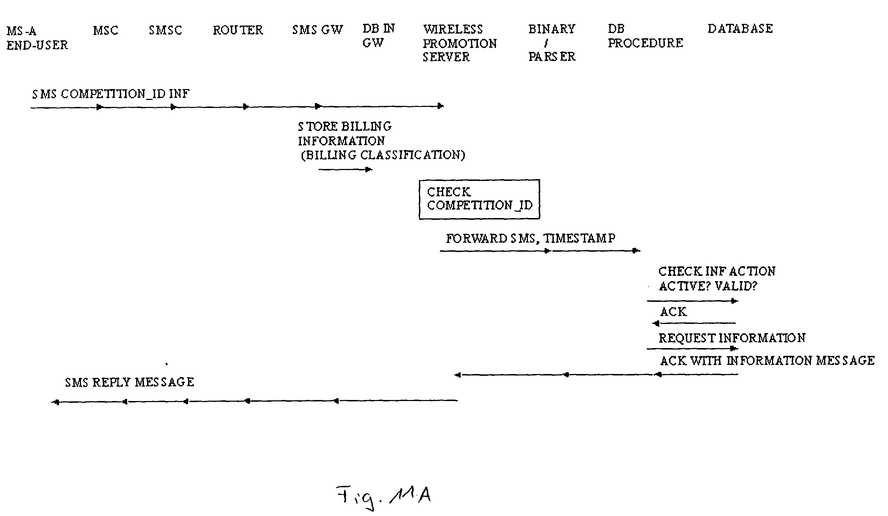

Fig. 11, 11A show a further signal diagram related to an information request by the subscriber. In addition to the above described functions, an information function can be provided. This information can be help information, for example, in case the subscriber has any particular problem with the use of the system. He then sends an SMS message to the promotion server. This message can be, for example, "competition_id inf ",wherein "competition_id" is the name of the chosen sports competition and "inf" is a request for information. Billing information and classification is sent by the SMS gateway to the database in the gateway and is stored there. The promotion server then checks the competition ID, for example, whether it corresponds to a still valid service or not. If the competition ID check is positive, the promotion server forwards the SMS together with a timestamp indicating the reception time of the SMS via the binary/parser to a database processing means through which it is checked in the database whether the required "information" action is still active and valid.

The required information is fetched from the database and acknowledged with a information reply message to the promotion server. Finally, the promotion server sends a SMS information reply message to the mobile phone terminal of the end-user.

## Claims

1. A system for interactive data exchange between subscribers of a telecommunications network service and the telecommunications network service provider, comprising:
means for registering the subscriber to the service;
database means for storing subscriber profile information;
means for providing gaming data and advertisement information related to the particular subscriber profile to the subscriber;
means for receiving a reply message from the subscriber participating in a game;
means for determining and selecting an action in response to the reply message;
means for performing the determined and selected action;
means for informing an advertisement provider about the outcome of the game.

2. A system according to claim 1, wherein the means for providing gaming data and advertisement information to the subscriber and receiving a reply message from the subscriber comprise a short message switching center (3), a gateway (4) for the reception of SMS-messages, a billing management unit (6) and a web access unit (7), and wherein the gateway (4) and the web access unit (7) being connected to a management system unit (9).

3. A system according to claim 2, wherein the management system unit (9) distributes the incoming messages to one of a plurality of service management system units (10) each handling one specific service and exchanging data with a corresponding processor unit (11) and a database unit (12).

4. A system according to claim 3, wherein the processor unit (11) comprises an administration processor, a competition processor and a customer processor.

5. A system according to claim 3, wherein the database unit (12) comprises an administration database, a competition database and a customer database.

6. A system according to one of the preceding claims wherein the advertisement information is transferred from the advertisement provider to the management unit (9).

7. A method for interactive data exchange between a subscriber of a telecommunications network service and the telecommunications network service provider, comprising the steps of:
a. registering the subscriber to the service;
b. storing subscriber profile information in a database;
c. providing gaming data and advertisement information related to the particular subscriber to the subscriber;
d. receiving a reply message from the subscriber participating in a game;
e. determining and selecting an action in response to the reply message received in step d);
f. performing the action determined and selected in step e);
g. informing an advertisement provider about the outcome of the game.

8. A method according to claim 7, wherein the gaming data and the advertisement information transmitted to the subscriber in step c) and the reply message received from the subscriber is in the form of written text.

9. A method according to claim 7, wherein the gaming data and the advertisement information transmitted to the subscriber in step c) and the reply message received from the subscriber is in the form of an image or pictorial symbol.

10. A method according to claim 7, wherein the gaming data and the advertisement information transmitted to the subscriber in step c) and the reply message received from the subscriber is in the form of a voice message.

11. A method according to one of the claims 7 to 10, wherein the data exchange between the service provider and the subscriber is transmitted via a mobile communications network carrier to subscribers of the network equipped with mobile telecommunications terminals.

12. A method according to one of the claims 7 to 11, wherein the data exchange between the service provider and the subscriber is made in the form of short message service (SMS) text messages.

13. A method according to one of the claims 7 to 12, wherein the data exchange between the service provider and the subscriber is transmitted via a computer network to subscribers of the network.

14. A method according to one of the claims 7 to 13, wherein the information transmitted to the advertisement provider is information identifying the winner of the game and/or information enabling deliverance of the prizes won.
